Europäisches Patentamt

European Patent Office

Office européen des brevets

(19)

(11) **EP 0 762 735 A2**

(12) **EUROPEAN PATENT APPLICATION**

(43) Date of publication:
    **12.03.1997 Bulletin 1997/11**

(51) Int Cl.[6]: **H04N 1/41**

(21) Application number: **96306141.1**

(22) Date of filing: **22.08.1996**

(84) Designated Contracting States:
    **DE FR GB IT**

(30) Priority: **24.08.1995 AU PN5009/95**
    **30.11.1995 AU PN6905/95**

(71) Applicant: **CANON INFORMATION SYSTEMS RESEARCH AUSTRALIA PTY LTD.**
**North Ryde, NSW 2113 (AU)**

(72) Inventor: **Liguori, Vincenzo**
**North Ryde, New South Wales 2113 (AU)**

(74) Representative:
**Beresford, Keith Denis Lewis et al**
**BERESFORD & Co.**
**2-5 Warwick Court**
**High Holborn**
**London WC1R 5DJ (GB)**

(54) **A method and apparatus for processing digital data**

(57)     The present invention relates to a computer-implemented method and apparatus for representing data. There is also disclosed a computerised method and apparatus for creation of a portion of an image (30) from the representation data of the image. The method of representing data involves dividing the data into a plurality of regions (6; 32 to 35), wherein each region contains a first portion of said data; and then for each of said regions, performing the steps of: determining a mapping from a second portion (5) of said data to said first portion of the current region to minimise an error measure ($ERROR_{MIN}$), wherein said second portion of said data includes said current region so that said current region is positioned within said second portion of said data; storing said mapping as a representation of said current region if said error measure ($ERROR_{MIN}$) is below a predetermined threshold; and recursively applying the steps of said method to said current region if said error measure ($ERROR_{MIN}$) is greater than or equal to said predetermined tolerance. The computerised method for creation of a portion (112) of an image (110) from representation data of the image, comprises the steps of: selecting a region (112) of an arbitrary image corresponding to said portion of said image; determining subsample data (111) of the representation data, wherein upon decompression the subsample data includes at least said portion of said image so that said portion of said image is positioned within said subsample data; and decompressing said subsample data.

**Description**

The present invention relates to a new form of representation of data and, more particularly, utilises a fractal technique to produce an alternative compressed form of data, such as image data.

United States Patent No. 5,065,447 entitled "Method and Apparatus for Processing Digital Data" by Michael F. Barnsley and Alan D. Sloan (Barnsley et al.) discloses a system of representing data which has a number of advantages, including compression, The system is becoming quite popular to those skilled in the art and is referred to as "Fractal" representation of the data,

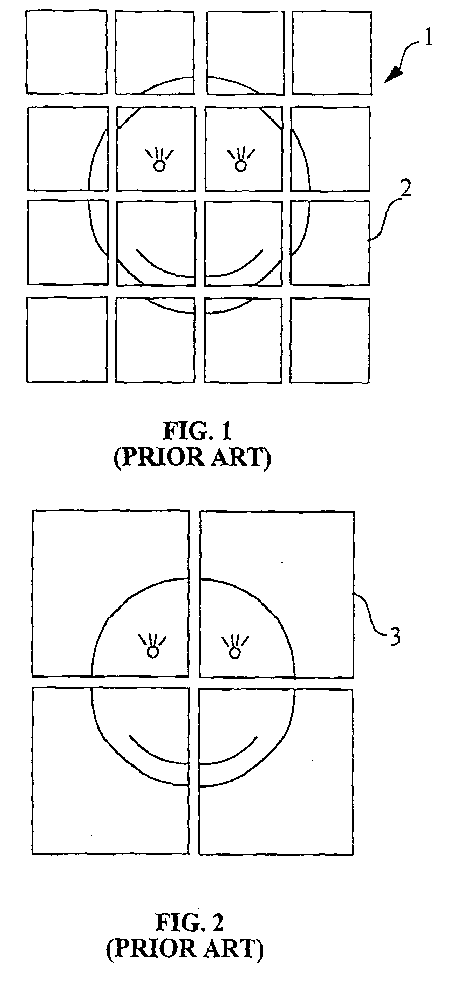

In the system described by Barnsley et al, the data to be compressed, such as image data, is broken up into a number of "domain" blocks having a fixed size. Referring to Fig. 1, a diagram of the process of breaking up an image 1 into a predetermined number (e.g., 16) of domain blocks 2 is reproduced Fig. 1(c) of the Barnsley et al. patent.

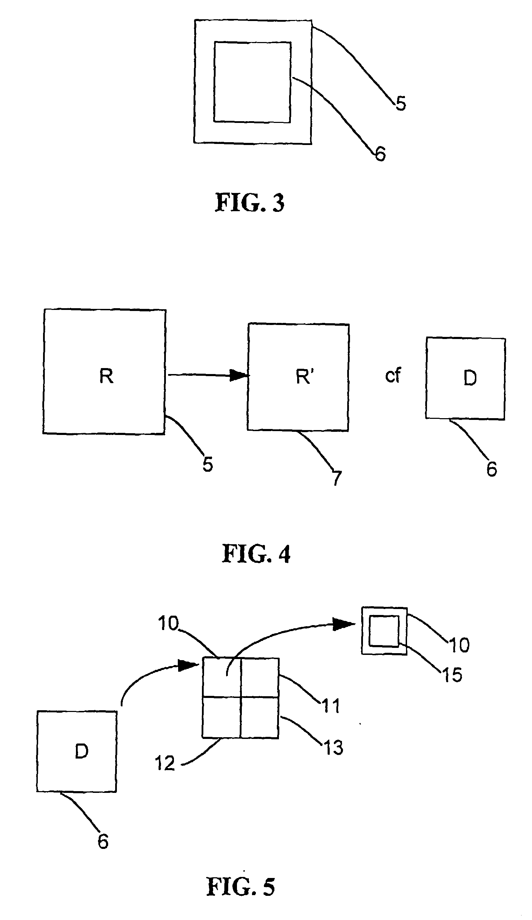

The next step in the Barnsley et al. system is to partition the image into a predetermined number (e.g., 4) of "range" blocks. The range blocks 3 are preferably larger than the domain blocks 2. Referring now to Fig. 2, a diagram of the image 1 partitioned into a series of large range blocks 3 is reproduced from Fig. 2(b) of the Barnsley et al. patent.

Additional range blocks 3 are created by taking various rotations and reflections of the range blocks 3 to create a "pool" of candidate range blocks. Each of the range blocks within the pool is then transformed by averaging or subsampling to have the same dimensions as the corresponding domain block 2.

The next step in the Barnsley et at system is to determine, for each of the domain blocks 2, a corresponding range block from the pool of range blocks which most closely matches the current domain block. The matching criteria used can be one of various methods disclosed in the Barnsley et at. patent. The overall image 2 is then represented by the transformations between the closest matching range block to each corresponding domain block 2.

The ability to represent an image 1 by such transformations can achieve substantial compression of the image 1, whereby each domain block 2 is represented simply by the transformation of the closest corresponding range block. Additionally, such a "Fractal" representation is resolution independent, as will be understood by those skilled in the art, since the actual pixel division of each range and/or domain block 3, 2 is irrelevant to the application of the rule to determine a current domain block 2.

However, the system of the Barnsley et at. patent has a number of disadvantages associated with it. Firstly, to encode an image 1, the closest matching range block must be determined for each domain blocks. Such a search can be highly time consuming and can result in fractal techniques being discarded for use in compression systems or the like where the requirement to rapidly compress an image (e.g., a video-conferencing system) is paramount. A number of systems have been described in the art attempting to overcome this problem. This has included the use of extensive code books to cut down or limit the complexity of the required search.

A further disadvantage of the Barnsley et al. patent is that it is not "adaptive", since the disclosure assumes that each of the domain blocks 2 has a standard size. For example, a very simple image (e.g., a blank page) is encoded into the same number of domain blocks 2 as a very complex image having a substantial number of high frequency components.

Other disadvantages of the Barnsley et al. system include the inability to decompress part of an image without decompressing the entire image. Still further, since the closest matching range block to each corresponding domain block is typically obtained from any portion of the entire image, the corresponding domain block is dependent, in principle, on the entire image. Consequently, to decompress any portion of the image, the entire image must be decompressed.

It is an object of the present invention to provide an alternative Fractal representation system that ameliorates one or more of the aforementioned disadvantages.

In accordance with a first aspect of the present invention, there is provided a computer-implemented method for representing data, said method comprising the steps of:

dividing the data into a plurality of regions, wherein each region contains a first portion of said data; and
for each of said regions, performing the steps of:

determining a mapping from a second portion of said data to said first portion of the current region to minimise an error measure, wherein said second portion of said data includes said current region so that said current region is positioned within said second portion of said data:
storing said mapping as a representation of said current region if said error measure is below a predetermined threshold; and
recursively applying the steps of said method to said current region if said error measure is greater than or equal to said predetermined tolerance.

In accordance with a second aspect of the present invention, there is provided a computer-implemented apparatus for representing data, comprising:

means for dividing the data into a plurality of regions, wherein each region contains a first portion of said data; and processing means coupled to said dividing means for operating on each of said regions, comprising:

means for determining a mapping from a second portion of said data to said first portion of the current region to minimise an error measure, wherein said second portion of said data includes said current region so that said current region is positioned within said second portion of said data;
means for comparing said error measure with a predetermined threshold;
means for storing said mapping as a representation of said current region if said error measure is below said predetermined threshold; and
wherein said dividing means and said processing means recursively operate on said current region if said error measure is greater than or equal to said predetermined tolerance.

In accordance with a third aspect of the present invention, there is provided a computerised method for creation of a portion of an image from representation data of the image, said method comprising the steps of:

selecting a region of an arbitrary image corresponding to said portion of said image;
determining subsample data of the representation data wherein upon decompression the subsample data includes at least said portion of said image so that said portion of said image is positioned within said subsample data; and
decompressing said subsample data.

In accordance with a fourth aspect of the present invention, there is provided a computerised apparatus for creating a portion of an image from representation data of the image, comprising:

means for selecting a region of an arbitrary image corresponding to said portion of said image;
means for determining subsample data of the representation data, wherein upon decompression the subsample data includes at least said portion of said image so that said portion of said image is positioned within said subsample data; and
means for decompressing said subsample data.

In accordance with a fifth aspect of the present invention, there is provided a method for compressing image data using a computer, said image data comprising a plurality of pixels, said method comprising the steps of:

(A) partitioning said image data into a plurality of domain blocks;
(B) for each domain block, performing the following sub-steps:

(i) selecting a portion of said image data to be a range block for said current domain block, where said range block is larger than the current domain block and the current domain block is located within said range block so as to eliminate searching of said image data for a range block;
(ii) reducing the size of said range block;
(iii) mapping the current domain block and said reduced range block so as to minimise an error measure;
(iv) storing said mapping for said current domain block in an adaptive manner dependent on said partitioning step if said error measure is less than a predetermined threshold; and
(v) repeating steps (A) and (B) using said domain block as said image data if said error measure is greater than or equal to said predetermined threshold.

## Brief Description of the drawings

Embodiments of the present invention will now be described with reference to the accompanying drawings in which:

Fig. 1 illustrates conventional partitioning of an image into domain blocks;
Fig. 2 illustrates conventional partitioning of the image into range blocks;
Figs. 3 and 4 illustrate the formation of domain and range blocks in accordance with an embodiment of the invention;
Fig. 5 illustrates a process of subdivision of a domain block in accordance with the embodiment;
Figs. 6 and 7 illustrate special cases for the formation of range blocks;
Fig. 8 illustrates the quadtree structure utilised in an example of the embodiments;
Fig. 9 illustrates the traversal order of a quadtree used in the embodiment; and

Fig. 10 illustrates an example quadtree decomposition of an image in accordance with the quadtree depicted in Fig. 8;

Fig. 11 illustrates an example of an image tiled into a plurality of tiles in accordance with the embodiment of the present invention;

Fig. 12 illustrates an expanded view of a portion of the image in accordance with the example depicted in Fig. 11;

Fig. 13 illustrates an expanded view of a portion of the image smaller than a single tile in accordance with the example of Fig. 11.

## Detailed Description

In the preferred embodiment of the present invention, the search of range blocks for one closest matching a domain block is dispensed with. In addition, an adaptive "quadtree" system is adopted for storing an adaptive representation of the image.

Referring to Fig. 3, the general principle behind eliminating the search process of the Barnsley et al. patent is described. In the preferred embodiment, each domain block 6 is formed from a corresponding range block 5 which, in a normal case, surrounds the domain block 6. The range block 5 is preferably four times larger than the domain block 6. The domain block 6 is formed by subsampling the corresponding range block 5 to reduce the size of the range block 5. Subsampling can also include averaging groups of pixels together. Fig. 4 is a simplified block diagram illustrating this process where the range block 5 (denoted R) is subsampled to form subsampled range block 7 (R'). Once this process has been completed, the subsampled range block 7 (R') is compared with the current domain block 6. This comparison is denoted by the characters "CF" in Fig. 4. The comparison is performed by attempting to minimise the following quadratic equation:

$$\text{Error}_{\min} = \min_{(a,b)} \sum_{x,y} (a \quad x \quad \text{range}_{x,y} \quad - \quad \text{domain}_{x,y} \quad - \quad b)^2 , |a| \leq 1, \qquad (1)$$

where the sum over x and y is taken over all pixels of the domain or range block, and the variables a and b are determined as part of the minimisation.

The minimisation process can be undertaken to determine values of a and b, in addition to the obtained error measure, $\text{Error}_{\min}$.

If the error measure obtained between the subsampled range block 7 and the current domain block 6 is less than a given threshold, which can be a predetermined constant multiplied by the size of the current domain block 6, then the current mapping comprising the minimised values of variables a and b is accepted and encoded.

If the current error measure $\text{Error}_{\min}$ is greater than the threshold, the domain block 6 is split into four subdomain blocks and the process is recursively applied to each of the four subdomain blocks. This process is illustrated in Fig. 5 wherein the domain block 6 is broken up into four subdomain blocks 10 to 13. Each of the subdomain blocks, 10 to 13 then have the above process recursively applied to them as necessary with, in this example, the subdomain block 10 having a corresponding range block 15 formed in the abovementioned manner.

The above process is repeated recursively until the threshold conditions are met or the recursive depth reaches a predetermined level.

Figs. 3 to 5 illustrate the encoding process used for typical domain blocks. Of course, the corner and edge domain blocks form special cases.

The preferred embodiment of the invention can be implemented using a general purpose computer. For example, it could be implemented using an IBM compatible personal computer, a Macintosh computer, a Sun Sparcstation, or any of a number of available computers. A typical configuration a general purpose computer includes a central processing unit (CPU) coupled to a video display generator, memory including random access memory (RAM) and/or read-only memory (ROM), a storage device such as a hard disk, floppy disk, or CD-ROM, and an input/out interface(s) via a bus comprising data address and control lines. A video display monitor is connected to the video display generator. It will be apparent to a person skilled in the art that numerous variations and modifications of the foregoing typical configuration of a general purpose computer can be made without departing form the scope and spirit of the invention.

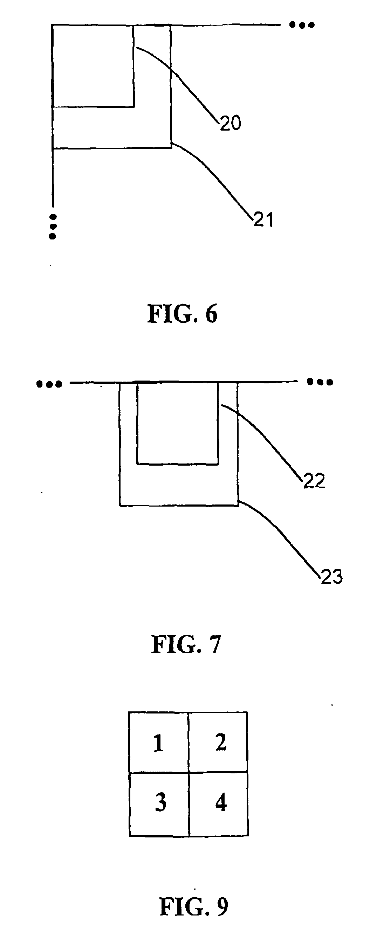

Fig. 6 illustrates the encoding process used for a comer domain block 20. In this case, the corresponding range block 21 is formed as illustrated. Further, a symmetrical arrangement is taken for each of the remaining corner blocks (not shown).

Similarly, Fig, 7 illustrates the encoding process for those domain blocks 22 lying along the edge of the input image data and the corresponding range block 23. The other edges can be treated symmetrically.

The recursive process outlined above produces a "quadtree" like representation of the image. Quadtrees are known to those skilled in the art of computer graphics. For example, quadtrees and their three dimensional equivalent, "octtrees", are discussed in standard text books such as Computer Grapbics : Principles and Practice by Foley, Van-Dam et al., Second Edition, Published 1990 by the Addison-Wesley Publishing Company Inc. at pages 550-555.

The corresponding encoding of the image can be stored as a stream of information in which each quadtree split is stored as a one bit (1): otherwise, a zero bit (0) is stored followed by the a and b co-efficients, which can be quantised to a predetermined accuracy.

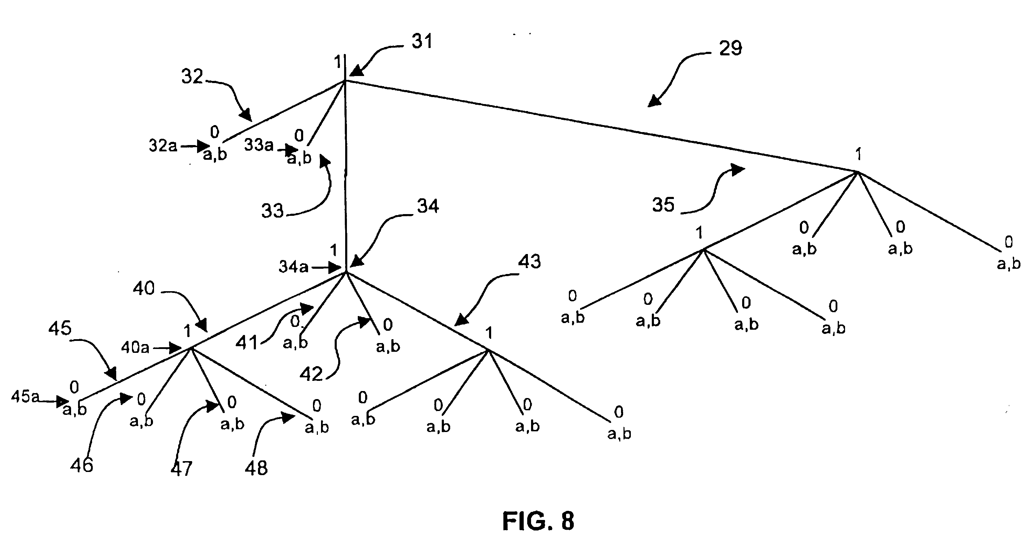

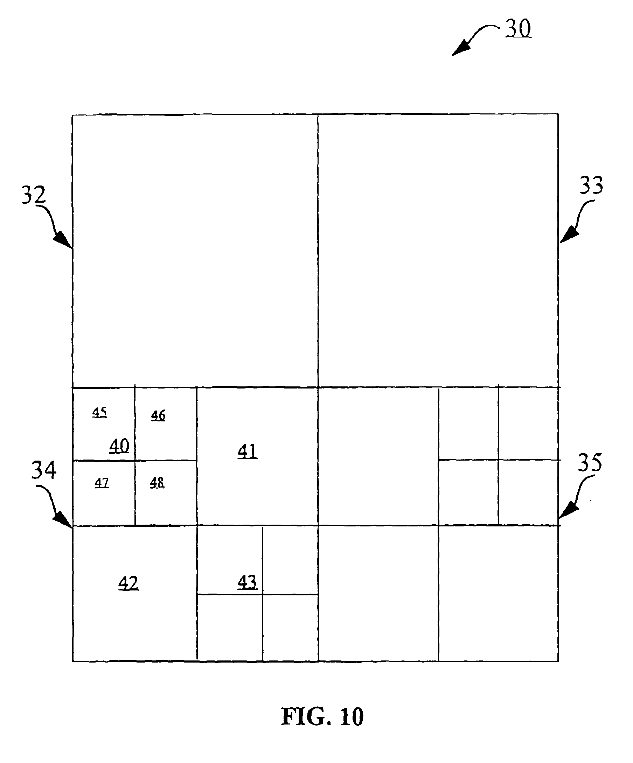

Figs. 8 to 10 illustrate the representation of an image. To represent the image 30 of Fig. 10 by the above described quadtree format, Fig. 8 illustrates the corresponding quadtree 29. A bit 31 having the value one (1) is stored first to represent the division of the image 30 into four quadrants 32 to 35. The traversal order of the quadrants 32 to 35 can be arbitrarily determined. The traversal order illustrated in Fig. 9 used in the present example in which the upper right quadrant is traversed first. Node 32a of the quadtree 29 in Fig. 8 is used to represent the quadrant 32 in Fig. 10. In the present example, it is assumed that the constants a and b of the quadrant 32 are found such that the error measure Error$_{min}$ is less than the corresponding threshold. Hence, further subdivision is not required and at node 32a a zero (0) bit is stored followed by the constants a and b. In the corresponding linear storage sequence of the quadtree 29, the node 32a follows node 31.

It is further assumed that, when dealing with the next quadrant 33, constants a and b are again found to satisfy the threshold requirements. Hence, node 33a contains a zero bit indicator and corresponding constants a and b.

Next, it is assumed that constants a and b are unable to be determined for quadrant 31 so that the error measure is less than the threshold. Hence, a one bit indicator is stored at node tree location 34a. The quadrant 34 is then recursively divided into subquadrants 40 to 43. The subquadrant 40 is then processed and, it is again assumed that constants a and b cannot be found to satisfy the requisite threshold requirements. The subquadrant 40 must accordingly be further divided into sub-subquadrants 45 to 48 as illustrated in Fig. 10. This division process is recognised in the quadtree 29 of Fig. 8 at the node 40a, where a one bit is stored.

The next domain block to be determined is that represented via sub-subquadrant 45. It is here assumed that constants a and b can be found and hence at node 45a, a zero indicator bit is stored followed constants a and b.

The process of quadtree division can then continue to process the image 30 of Fig. 10 to produce the quadtree 29 illustrated in Fig. 8 which represents the image.

The storage of the quadtree 29 can then be determined by performing a depth first search of the quadtree 29, well known to those skilled in the art.

The inverse or decompression process can then be applied to the stored representation of the quadtree 29. Processing begins with an initial image 30 that can take an arbitrary form, as is usual in the Fractal decompression process. The depth-first stored form of the quadtree 29 can then be decoded to determine corresponding domain blocks (e.g., 32 to 48) from the stored quadtree 29. Each domain block will have associated therewith constants a and b.

One method of decoding the image 30 is to take each domain block 32 to 48 in turn and form a new domain block from a corresponding range block using the process described with reference to Figs. 3 to 7. This process can be iterated until the change in domain blocks between iterative passes is below a predetermined threshold. Otherwise, the iterative process can be carried out a predetermined number of times.

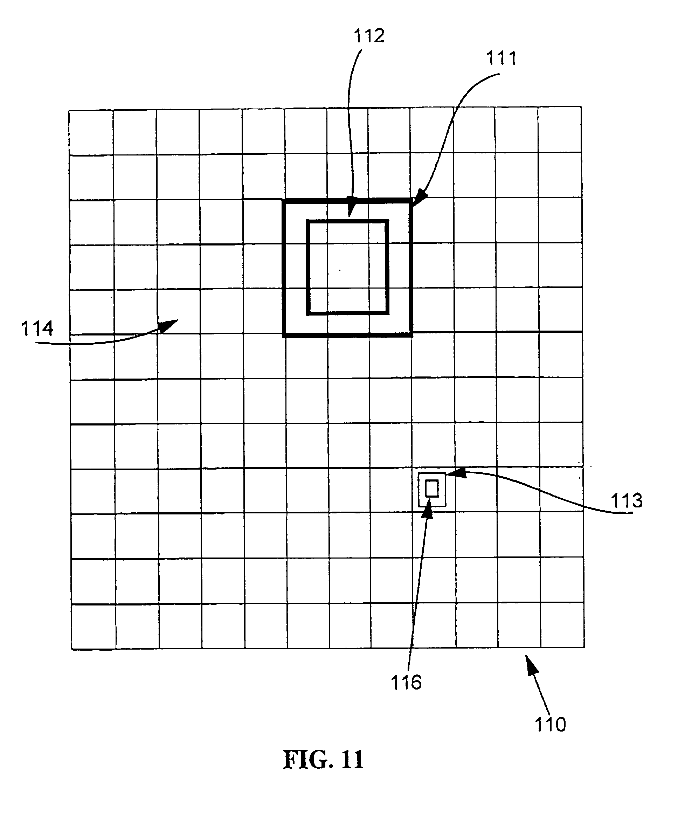

Referring now to Fig. 11, the partial decompression process in accordance with the preferred embodiment of the present invention is described.

Assuming that it is desired to encode the image 110, the image 110 is divided into a plurality of tiles 114, and each tile is considered to be an image 30. The tiles 114 can be of a predetermined shape or size.

To simplify the explanation of the example depicted in Fig. 11, square tiles 114 are assumed to subdivide the image 110 in a twelve-by-twelve arrangement. In accordance with the preferred embodiment, each tile 114 of the image 110 is subject to the encoding process substantially as described with reference to Figs. 8 to 10. Hence, each tile 114 of the image 110 is independently encoded and stored in a quadtree format substantially as described above. A stream of information is stored including a one bit (1) everytime a quadtree splits; otherwise, a zero bit (0) is stored followed by the a and b coefficients, which are quantised to a predetermined accuracy.

As one example of the preferred embodiment, a region of the image 110 represented by the rectangle 112 in Fig. 11 can be chosen for decompression

The decompression process for the region of the image 110 represented by the rectangle 112 proceeds by determining the minimum selection of tiles 114 that, wherein upon decompressing, includes at least the region of the image 110 represented by the rectangle 112. In one example, illustrated by Fig. 11, the minimum selection of tiles 114 including the rectangle 112 is depicted by a larger expansion zone 111 encompassing at least nine tiles 114 that intersect with the region of the image 110 represented by the rectangle 112.

Each of tiles 114 is taken to be an independent image encoded or compressed substantially as described above with reference to Figs. 8 to 10. Consequently each of the nine tiles 114 in the minimum selection of tiles 114 bounded by the larger region 111 is independently inverted or decompressed to result in the decompression of the region of image 110 bounded by the expansion zone 111.

Visual artifacts created by possible boundary effects when decompressing the region represented by the larger rectangle and referred to herein as the expansion zone 111 diminish exponentially toward the geometric centre of the decompressed region.

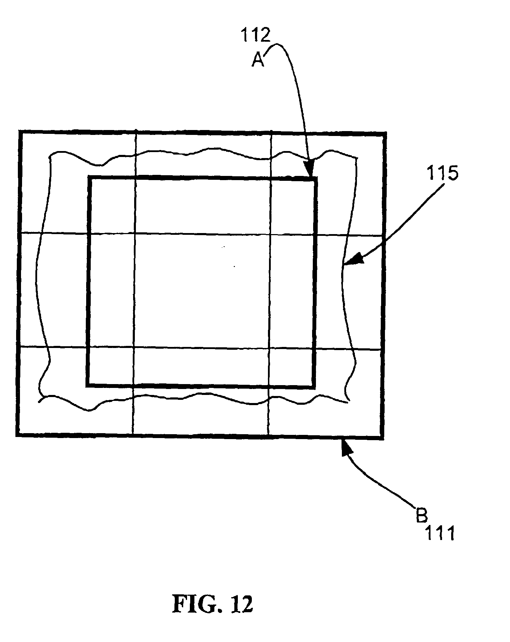

Fig. 12 shows an enlarged view of the expansion zone 111 of Fig. 11. An approximate bounding region 115 indicates the region where visual artifacts created during decompression of the expansion zone 111 are substantially diminished. Within the approximate bounding region 115, visual artifacts are substantially unnoticeable to the human visual system.

Upon decompression of the expansion zone 111, the resultant image is clipped substantially to the region of the image 110 represented by the rectangle 112 of Figs. 11 and 12.

Satisfactory results can also be obtained where the expansion zone 111 of Fig. 12 is only a few pixels larger in width and length than the region of image 110 represented by rectangle 112 in Figs. 11 and 12, because the visual artifacts diminish exponentially from the boundary of the decompressed region.

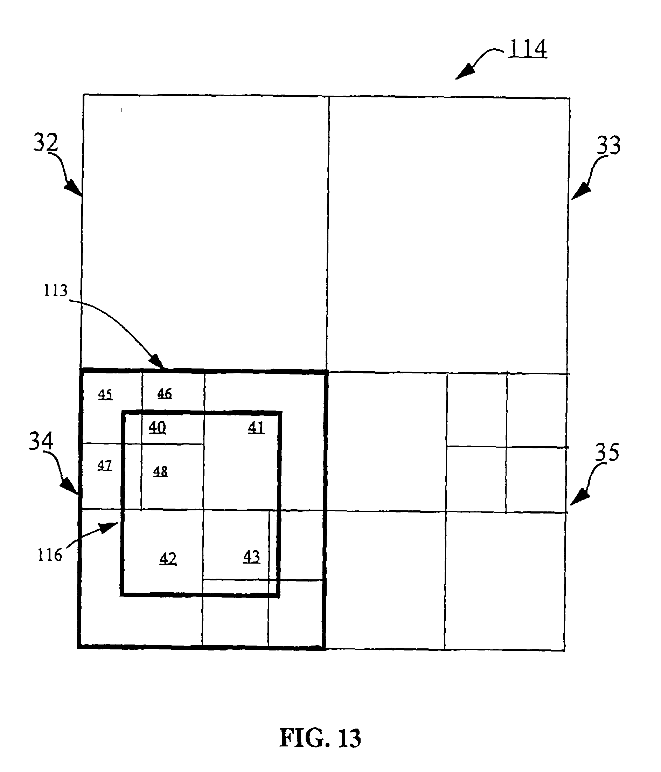

A further example will now be explained with reference to Figs. 11 and 13. It will be apparent to a person skilled in the art from the present example that, although the preferred embodiment has been described with reference to the expansion zone 111 of Fig. 11 encompassing a multiplicity of tiles 114, the present invention is not limited to this. A region smaller than a single tile 114 having a quadtree encoded format as described above can also be decompressed.

Another region of image 110 represented by rectangle 116 is shown in Fig. 11 that is smaller than a single tile 114 desired for re-creation from the representation data. An expanded view of the other region of image 110 represented by rectangle 116 is shown in Fig. 13. An expansion zone 113 comprises a plurality of domain blocks (34, 42 to 48) that upon decompression includes at least the region of image 110 represented by rectangle 116 of Fig. 13.

The quadtree representation data associated with a tile 114, which includes the region of the image represented by the rectangle 116, is traversed to determine which region of quadrants or sub-quadrants (e.g., 32, 42 to 48) intersect the bounding region 113 of Fig. 13.

Following the result of the quadtree traversal only those regions of quadrants or sub-quadrants coincident with the bounding region 113 are subjected to the decompression process. From the example depicted in Fig. 13 and with reference to the quadtree of Fig. 8, the bounding region 113 can be decoded by applying the inversion process to the quadtree node 34a and its descendents.

When the inversion process is applied in this manner, the resultant portion of image 110 is substantially the same size as the bounding region 113. This portion of the image 110 is clipped to conform with the size of the region of image 110 represented by rectangle 116. Clipping in this manner substantially removes artifacts created by boundary effects.

Unlike the Barnsley et al. system of fractal compression and decompression, in the process disclosed herein, a range block is centred on a domain block. This arrangement ensures that a portion of an image contains enough information to compress or decompress the portion of the image without substantial recourse to the region of the image external to the portion.

Therefore; as is evident from the above description, decompression (decoding) of part of an image is possible without the need to decompress the entire image in contrast to the system of the Barnsley et al. patent.

The above process has other significant advantages over the system of the Barnsley et al. patent. These include: dispensing with a search and the corresponding speed gain. Also, the quadtree splitting process is an adaptive one in that more complex "worse case" images result in a greater degree of splitting (and, unfortunately lower compression ratios), whereas simple images can result in lower levels of quadtree splitting. Further, as is evident from the foregoing description, it is not necessary to store any information regarding the range block apart from the co-efficients a and b. Hence, the amount of information is again reduced. Other advantages include partial decompression, or more specifically decompression of a portion of the image while the image external to the portion of the image remains substantially compressed (or encoded).

Although the preferred embodiment has been described with reference to the quadtree decomposition of an image, it will be obvious to those skilled in the art that the present invention is not limited thereto. For example, there is no reason, apart from convenience, for the domain block to be limited to squares. Indeed, squares have the disadvantage that their boundaries are vertical and horizontal lines. The human eye is, unfortunately, more likely to notice visual artifacts like horizontal and vertical discontinuities that may exist on the boundaries of various domain blocks. It is therefore envisaged that the preferred embodiment could be readily extended to a process of triangulation where triangles could be used as the basic shape for the various range and domain blocks.

Further, Equation (1) has been used because it is easy to understand and deal with. Equation 1 is in a linear form having two co-efficients a and b. Other forms of equations, such as quadratics, may produce a better match between range and domain blocks thus leading to less quadtree splitting and better compression.

Further, the above process can be obviously applied to data sets other than mere pixel values. For example, in the domain of images, the above process could be easily applied to the frequency domain or the Hadamard transformed domain. In this respect, it is envisaged that various different weighting functions could be utilised for different portions of the transformed domain. Additionally, the principles of the present invention can be extended to other multidimensional data.

The foregoing describes and embodiment of the invention and various modifications thereto. Further modifications, obvious to those skilled in the art, can be made thereto without departing from the scope of the invention.

**Claims**

1. A method for representing data, said method characterised by comprising the steps of:

   dividing the data into a plurality of regions, wherein each region contains a first portion of said data; and
   for each of said regions, performing the steps of:

      determining a mapping from a second portion of said data to said first portion of the current region to minimise an error measure, wherein said second portion of said data includes said current region so that said current region is positioned within said second portion of said data;
      storing said mapping as a representation of said current region if said error measure is below a predetermined threshold; and
      recursively applying the steps of said method to said current region if said error measure is greater than or equal to said predetermined tolerance,

2. The method of claim 1, characterised in that said second portion of said data comprises a subsampled region of said data which includes said current region.

3. The method of claim 2, characterised in that said subsampled region further includes a border around said current region.

4. The method of claim 1, characterised in that said data has a two-dimensional form and said error measure comprises:

$$Error_{min} = \min_{(a,b)} \sum_{x,y} (a \times range_{x,y} - domain_{x,y} - b)^2, |a| \le 1$$

   where a and b are variables, $domain_{xy}$ represents a data value of a current region at the position (x,y), $range_{xy}$ represents a corresponding data value in said second portion of said data, and the sum is taken over all values of said current region so as to determine values of a and b which minimise said error measure.

5. The method of claim 4, characterised in that said values a and b are utilised as a representation of said current region of said data.

6. The method of claim 1, characterised in that said data takes a two dimensional form and said dividing step comprises using quadtree division of said data.

7. A computer-implemented apparatus for carrying out the method according to any one of claims 1 to 6, characterised by said apparatus comprising:

   means for dividing the data into said plurality of regions, wherein each region contains said first portion of said data; and
   processing means coupled to said dividing means for operating on each of said regions, comprising:

      means for determining said mapping from said second portion of said data to said first portion of the current region to minimise said error measure, wherein said second portion of said data includes said current region so that said current region is positioned within said second portion of said data;
      means for comparing said error measure with said predetermined threshold;
      means for storing said mapping as said representation of said current region if said error measure is below said predetermined threshold; and
      wherein said dividing means and said processing means recursively operate on said current region if said error measure is greater than or equal to said predetermined tolerance.

8. A method for creation of a portion of an image from representation data of the image, said method characterised by comprising the steps of:

selecting a region of an arbitrary image corresponding to said portion of said image;
determining subsample data of the representation data; wherein upon decompression the subsample data includes at least said portion of said image so that said portion of said image is positioned within said subsample data; and
decompressing said subsample data.

9. The method of claim 8, characterised in that said representation data has a two-dimensional form, and said method includes the step of dividing said data using quadtree division of said data.

10. The method of claim 8, characterised in that said step of selecting a region further includes the step of determining at least one relative coordinate point indicative of the relative position of said region of said arbitrary image, and that the step of determining subsample data includes the step of locating the subsample data within the representation data of the image using the at least one relative coordinate point.

11. The method of claim 8, characterised in that said representation data of the image includes identifiers indicating a mapping between a domain block and a range block.

12. The method of claim 11, characterised in that the domain block is centered on the range block.

13. The method of claim 8, characterised in that the decompressing step includes the step of extracting the subsample data while leaving the representation data substantially unchanged.

14. The method of claim 8, characterised in that the decompressing step is recursively applied for a predetermined number of times.

15. The method of claim 8, characterised in that the decompressing step is recursively applied until an error measure between consecutive decompression results is below a predetermined tolerance.

16. The method of claim 8, characterised in that following the decompressing step, the decompressed subsample data is displayed on an output device.

17. A computerised apparatus for carrying out the method according to any one of claims 8 to 16, characterised by said apparatus comprising:

means for selecting said region of said arbitrary image corresponding to said portion of said image;
means for determining subsample data of the representation data, wherein upon decompression the subsample data includes at least said portion of said image so that said portion of said image is positioned within said subsample data; and
means for decompressing said subsample data.

18. A method for compressing image data using a computer, said image data comprising a plurality of pixels, said method characterised by comprising the steps of:

(A) partitioning said image data into a plurality of domain blocks;
(B) for each domain block, performing the following sub-steps :

(i) selecting a portion of said image data to be a range block for said current domain block, where said range block is larger than the current domain block and the current domain block is located within said range block so as to eliminate searching of said image data for a range block;
(ii) reducing the size of said range block;
(iii) mapping the current domain block and said reduced range block so as to minimise an error measure;
(iv) storing said mapping for said current domain block in an adaptive manner dependent on said partitioning step if said error measure is less than a predetermined threshold; and

(v) repeating steps (A) and (B) using said domain block as said image data if said error measure is greater than or equal to said predetermined threshold.

19. The method according to claim 18, characterised in that said mapping step (iii) comprises the step of determining parameters a and b so as to minimise said error measure; and

that said storing step (iv) further comprises storing said parameters a and b.

20. The method according to claim 18, characterised in that said storing step (iv) further comprises storing said mapping if a predetermined number of partitionings of said image data have been carried out to produce said current domain block.

21. The method according to claim 18, characterised in that said partitioning step (A) comprises the step of quadtree partitioning said image data.

22. The method according to claim 21, characterised in that said storing step (iv) comprises the steps of storing said mapping in a node for said current domain block in a quadtree structure and clearing a quadtree-split indicator of said node; and

that said repeating step (v) comprises the step of setting said quadtree split indicator in said node for said current domain block in said quadtree structure.

23. The method according to claim 18, characterised in that said reducing step (ii) comprises one of the group of steps consisting of subsampling said range block and averaging data values of said range block.

24. The method according to claim 18, characterised in that in said selecting step (i) the current domain block is located within said range block in a predetermined symmetrical manner.

25. A fractal-based data compression system wherein a plurality domain blocks of an array are encoded by reference to larger range blocks for the same array, and wherein the range block for encoding each domain block is constrained to be a block including the domain block, so as to permit selective decompression of portions of the array.

26. An adaptive fractal-based compression system wherein an input array is sub-divided into a plurality of domain blocks, encoded by reference to larger range blocks, and wherein each domain block is further sub-divided into smaller domain blocks adaptively, depending on the quality of matching between the domain block and its range block.

27. A system according to claim 26 wherein each range block is constrained to be a region which includes the domain block being encoded.

28. A method, system or apparatus having the features of any combination of the preceding claims.

**FIG. 1**
**(PRIOR ART)**

**FIG. 2**
**(PRIOR ART)**

**FIG. 3**

**FIG. 4**

**FIG. 5**

FIG. 6

FIG. 7

| 1 | 2 |
|---|---|
| 3 | 4 |

FIG. 9

FIG. 8

**FIG. 10**

**FIG. 11**

**FIG. 12**

**FIG. 13**